# FASCICULE DE BREVET EUROPEEN

(11) **EP 2 870 026 B1**
(45) Date de publication et mention de la délivrance du brevet: **09.12.2020**
(21) Numéro de dépôt: 13744677.9
(22) Date de dépôt: 03.07.2013
(51) Int. Cl.: B60N 2/90

(54) **DISPOSITIF D'INCLINAISON DE DOSSIER DE SIEGE**
VORRICHTUNG ZUM ZURÜCKNEIGEN EINES SITZES
SEAT-BACK TILTING DEVICE

(30) Priorité: 03.07.2012 FR 1256364
(43) Date de publication de la demande: 13.05.2015
(73) Titulaire: Renault S.A.S., 92100 Boulogne-Billancourt (FR); Nissan Motor Company, Limited, Kanagawa-ku Yokohama-shi Kanagawa 221-0023 (JP)
(72) Inventeur: DELECOLLE, David, F-60130 Avrechy (FR); LESUEUR, Gregory, F-78280 Montigny Le Bretonneux (FR); MOULINAS, Frederic, F-91470 Les Molieres (FR)
(74) Mandataire: Ipsilon
(86) Numéro de dépôt international: PCT/FR2013/051561
(87) Numéro de publication internationale: WO 2014/006323

(56) Documents cités:
- WO-A1-97/20706
- DE-A1- 2 348 364
- DE-U1- 29 622 601
- FR-A1- 2 776 585
- US-A- 6 009 770

## Description

La présente invention a pour objet un dispositif d'inclinaison de dossier de siège pour véhicule automobile.

Dans les véhicules automobiles, les sièges, et notamment les sièges avant, sont habituellement équipés d'un dispositif d'inclinaison de dossier. Ce dispositif d'inclinaison permet de faire pivoter le siège depuis une position de départ vers une position dans laquelle le siège est incliné.

L'inclinaison d'un siège est réalisée à l'aide d'un dispositif d'inclinaison, qui comprend typiquement une poignée de commande d'inclinaison, également appelée manette ou levier, qui permet de régler l'inclinaison du siège, et qui est solidarisée à un axe de commande apte à transmettre le mouvement de la poignée à un axe de pivotement du siège. Le document DE-A-23 48 364 montre un dispositif d'inclinaison muni d'un axe commun à deux poignées.

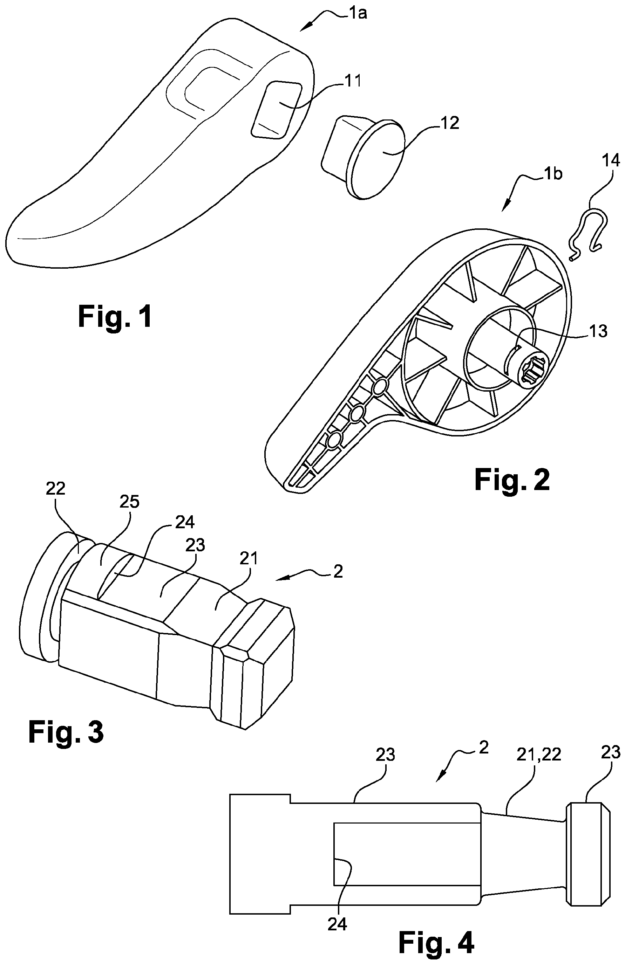

On connaît deux types de poignées de commande. Une première poignée de commande 1a, telle qu'illustrée à la figure 1, est munie d'une ouverture 11, qui est par exemple de section rectangulaire ou carrée. L'ouverture 11 permet de glisser la poignée 1a dans un axe de commande d"inclinaison. Des éléments de rappel de la poignée 1a sont disposés à l'intérieur de l'ouverture 11 et permettent de solidariser la poignée 1a à l'axe de commande. Un obturateur 12 permet d'empêcher le départ de la poignée 1a.

Un deuxième exemple de poignée de commande 1b, telle qu'illustré à la figure 2, comprend une rainure 13 destinée à accueillir un ressort 14 permettant de solidariser la poignée 1b à l'axe de commande et d'empêcher son départ.

L'utilisation de ces deux types de poignées implique l'utilisation de deux axes de commande d'inclinaison distincts, ce qui rend compliqué et coûteux le montage du dispositif d'inclinaison.

La présente invention vise à remédier à ces inconvénients.

Elle propose en particulier un dispositif d'inclinaison de dossier de siège comprenant un axe de commande d'inclinaison qui soit adapté aux deux types de poignée.

L'invention a ainsi pour objet un dispositif d'inclinaison de dossier de siège, comprenant une poignée de commande d'inclinaison pouvant être choisie parmi une première poignée de commande et une deuxième poignée de commande, et un axe de commande d'inclinaison sur lequel est disposée la poignée de commande.

Dans le dispositif selon l'invention défini par la revendication 1, l'axe de commande comprend :
- une zone de réception d'un premier élément de rappel associé à la première poignée de commande,
- une zone de réception d'un deuxième élément de rappel associé à la deuxième poignée de commande et
- une zone de transmission d'efforts de la première poignée de commande et de la deuxième poignée de commande.

La zone de réception du premier élément de rappel et la zone de réception du deuxième élément de rappel peuvent être distinctes.

La zone de réception du premier élément de rappel et la zone de réception du deuxième élément de rappel peuvent être confondues.

La zone de transmission d'efforts de la première poignée de commande et de la deuxième poignée de commande peut être de section rectangulaire ou carrée.

L'axe de commande peut comprendre en outre une butée de blocage longitudinal des poignées de commande.

L'axe de commande peut comprendre un système de détrompage.

Le système de détrompage peut être réalisé à l'aide de faces de l'axe de commande de dimensions différentes.

Le système de détrompage peut être réalisé à l'aide d'une nervure de l'axe de commande destinée à recevoir un doigt d'une poignée de commande.

L'élément de rappel associé à la première poignée de commande peut faire partie intégrante de la première poignée de commande, la première poignée de commande comprenant un obturateur, et l'élément de rappel associé à la deuxième poignée de commande peut être un élément distinct de la deuxième poignée de commande.

L'invention a également pour objet l'utilisation d'un dispositif décrit ci-dessus pour l'inclinaison d'un dossier de siège de véhicule automobile.

L'invention a également pour objet un kit selon la revendication 11.

D'autres caractéristiques et avantages de la présente invention apparaîtront plus clairement à la lecture de la description suivante donnée à titre d'exemple illustratif et non limitatif et faite en référence aux figures annexées sur lesquelles :
- la figure 1, déjà décrite, illustre un premier type de poignée de commande utilisable dans un dispositif selon l'invention,
- la figure 2, déjà décrite, illustre un deuxième type de poignée de commande utilisable dans un dispositif selon l'invention,
- la figure 3 illustre une partie d'un dispositif selon l'invention, conformément à un premier mode de réalisation,
- la figure 4 illustre une partie d'un dispositif selon l'invention, conformément à un deuxième mode de réalisation,
- la figure 5 illustre une partie d'un dispositif selon l'invention, conformément à un troisième mode de réalisation,
- la figure 6 illustre une partie d'un dispositif selon l'invention, conformément à un quatrième mode de réalisation, et
- la figure 7 est une vue en coupe de deux dispositifs selon l'invention.

Tel qu'illustré à la figure 3, un axe de commande d'inclinaison 2 selon l'invention comprend une zone de réception 21 d'un élément de rappel de la première poignée de commande 1a illustrée à la figure 1, une zone de réception 22 d'un élément de rappel de la deuxième poignée de commande 1b illustrée à la figure 2, une zone de transmission d'efforts 23 ainsi qu'une butée 24 destinée au blocage longitudinal des poignées de commande 1a,1b.

Les éléments de rappel 14 et 15 sont destinés à solidariser les poignées de commande 1b et 1a à l'axe de commande d'inclinaison 2 ; le premier élément de rappel 15 étant associé à la première poignée de commande 1a, et destiné à solidariser la première poignée de commande 1a à l'axe de commande d'inclinaison 2 et le deuxième élément de rappel 14 étant associé à la deuxième poignée de commande 1b, et destiné à solidariser la deuxième poignée de commande 1b à l'axe de commande d'inclinaison2.

L'axe de commande 2 peut être de forme globalement parallélépipédique, avec une section rectangulaire ou carrée.

La zone de réception 21 peut se présenter sous la forme d'un creux, par exemple d'une cuvette, notamment de section en U ou en V. La zone de réception 22 peut se présenter sous la forme d'une nervure. La zone de transmission d'effort 23 est une zone destinée à transmettre l'effort de chaque poignée de commande 1a,1b à l'axe de commande 2.

Le dispositif comprend également un détrompeur, permettant d'éviter le montage d'une poignée 1a,1b dans une mauvaise orientation angulaire. Le détrompeur peut être réalisé en utilisant des faces de l'axe de commande 2 de dimensions différentes. Ainsi, le détrompeur peut être réalisé à l'aide d'une zone 25 en saillie d'une des faces de l'axe de commande 22, la zone en saillie 25 pouvant par exemple être de surface extérieure circulaire. La zone 25 en saillie définit également une butée 24 en translation le long de l'axe de commande 2 pour les poignées de commande 1a,1b.

Dans un deuxième mode de réalisation, tel qu'illustré à la figure 4, sur laquelle les éléments identiques à ceux de la figure 3 portent les mêmes références, l'axe de commande 2 comprend une unique zone de réception 21,22 d'élément de rappel pour les deux poignées de commande 1a,1b. Cette zone de réception 21,22 est une nervure qui peut recevoir les deux éléments de rappel des poignées 1a,1b. L'axe de commande 2 comprend également une zone de transmission d'efforts 23 en deux parties, de part et d'autre de la zone de réception 21,22 d'élément de rappel. L'axe de commande 2 comprend également un détrompeur réalisé par un dimensionnement différent des faces de l'axe de commande 2.

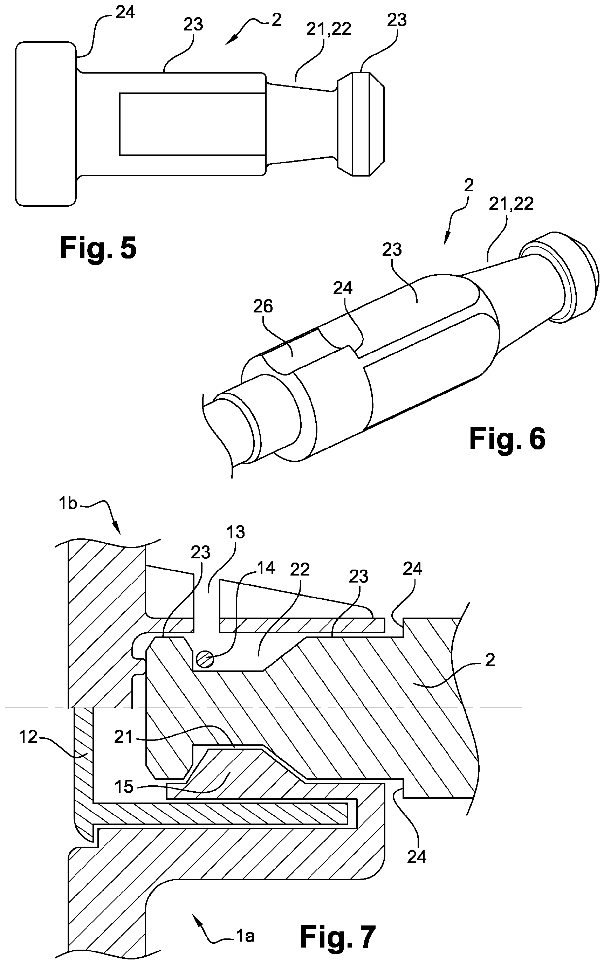

Un troisième mode de réalisation, illustré à la figure 5, sur laquelle les éléments identiques à ceux de la figure 4 portent les mêmes références, est similaire au deuxième mode de réalisation, à la différence que l'axe de commande 2 comprend une butée 24 plus franche, disposée dans le prolongement de la zone de transmission d'efforts 23.

Enfin, dans un quatrième mode de réalisation, tel qu'illustré à la figure 6, l'axe de commande 2 comprend une nervure 26 destinée à accueillir un doigt d'une poignée de commande 1a,1b, ce qui constitue le détrompeur. Ce système est différent des trois premiers modes de réalisation, dans lesquels le détrompage est assuré par des faces de l'axe de commande 2 de dimensions différentes.

La figure 7 illustre dans sa partie inférieure la première poignée de commande la installée sur l'axe de commande 2, tandis que la partie supérieure montre la deuxième poignée de commande 1b installée sur l'axe de commande 2.

La première poignée de commande la comprend un élément de rappel 15 qui exerce une poussée vers le haut, en direction de l'axe de commande 2. L'obturateur 12 permet d'empêcher le départ de la poignée la.

Dans le cas de la deuxième poignée de commande 1b, l'élément de rappel 14 n'appartient pas à la poignée de commande 1b. L'élément de rappel 14 permet de solidariser la poignée 1b à l'axe de commande 2 et d'empêcher son départ.

Par ailleurs, l'invention concerne aussi un kit d'inclinaison composé de deux dispositifs d'inclinaison, l'un muni d'une première commande d'inclinaison la et l'autre munie d'une deuxième commande d'inclinaison 1b, le kit d'inclinaison comprend ainsi deux commandes d'inclinaison 1a et 1b et au moins un axe de commande 2.

En outre, il est à noter que le dispositif selon l'invention peut également être utilisé dans d'autres types de réglages rotatifs.

## Revendications

1. Dispositif d'inclinaison de dossier de siège, comprenant une poignée de commande d'inclinaison (1a,1b) pouvant être choisie parmi un premier type de poignée de commande (1a) et un deuxième type de poignée de commande (1b), et un axe de commande d'inclinaison (2) sur lequel est disposée la poignée de commande (1a,1b), **caractérisé en ce que** l'axe de commande (2) comprend :
- une zone de réception (21) d'un premier élément de rappel (15) associé une poignée de commande (1a) du premier type,
- une zone de réception (22) d'un deuxième élément de rappel (14) associé une poignée de commande (1b) du deuxième type, et
- une zone de transmission d'efforts (23) de ladite poignée de commande (1a,1b).

2. Dispositif selon la revendication 1, **caractérisé en ce que** la zone de réception (21) du premier élément de rappel (15) et la zone de réception (22) du deuxième élément de rappel (14) sont distinctes.

3. Dispositif selon la revendication 1, **caractérisé en ce que** la zone de réception (21) du premier élément de rappel (15) et la zone de réception (22) du deuxième élément de rappel (14) sont confondues.

4. Dispositif selon l'une des revendications 1 à 3, **caractérisé en ce que** la zone de transmission d'efforts (23) de la poignée de commande (1a,1b) est de section rectangulaire ou carrée.

5. Dispositif selon l'une des revendications 1 à 4, **caractérisé en ce que** l'axe de commande (2) comprend en outre une butée (24) de blocage longitudinal de la poignées de commande (1a,1b).

6. Dispositif selon l'une des revendications 1 à 5, **caractérisé en ce que** l'axe de commande (2) comprend un système de détrompage.

7. Dispositif selon la revendication 6, **caractérisé en ce que** le système de détrompage est réalisé à l'aide de faces de l'axe de commande (2) de dimensions différentes.

8. Dispositif selon la revendication 6, **caractérisé en ce que** le système de détrompage est réalisé à l'aide d'une nervure (26) de l'axe de commande (2) destinée à recevoir un doigt d'une poignée de commande (1a,1b).

9. Dispositif selon l'une des revendications 1 à 8, **caractérisé en ce que** l'élément de rappel (15) associé à une poignée de commande (1a) du premier type fait partie intégrante de ladite poignée de commande (1a), celle-ci comportant en outre un obturateur (12), et **en ce que** l'élément de rappel (14) associé à une poignée de commande (1b) du deuxième type est un élément distinct de ladite poignée de commande (1b).

10. Utilisation d'un dispositif selon l'une des revendications 1 à 9 pour l'inclinaison du dossier d'un siège de véhicule automobile.

11. Kit d'inclinaison comprenant
- Un dispositif d'inclinaison selon les revendications 1 à 9 muni d'une commande d'inclinaison (1a) du premier type.
- Un dispositif d'inclinaison selon les revendications 1 à 9 muni d'une commande d'inclinaison (1b) du deuxième type.

## Patentansprüche

1. Vorrichtung zum Neigen einer Sitzrückenlehne, welche einen Neigungsbediengriff (1a, 1b), der aus einem ersten Typ von Bediengriff (1a) und einem zweiten Typ von Bediengriff (1b) gewählt werden kann, und eine Neigungsverstellachse (2), auf welcher der Bediengriff (1a, 1b) angeordnet ist, umfasst, **dadurch gekennzeichnet, dass** die Verstellachse (2) umfasst:
- einen Aufnahmebereich (21) für ein erstes Rückstellelement (15), das einem Bediengriff (1a) des ersten Typs zugeordnet ist,
- einen Aufnahmebereich (22) für ein zweites Rückstellelement (14), das einem Bediengriff (1b) des zweiten Typs zugeordnet ist, und
- einen Bereich der Kraftübertragung (23) des Bediengriffs (1a, 1b).

2. Vorrichtung nach Anspruch 1, **dadurch gekennzeichnet, dass** der Aufnahmebereich (21) für das erste Rückstellelement (15) und der Aufnahmebereich (22) für das zweite Rückstellelement (14) verschieden sind.

3. Vorrichtung nach Anspruch 1, **dadurch gekennzeichnet, dass** der Aufnahmebereich (21) für das erste Rückstellelement (15) und der Aufnahmebereich (22) für das zweite Rückstellelement (14) zusammenfallen.

4. Vorrichtung nach einem der Ansprüche 1 bis 3, **dadurch gekennzeichnet, dass** der Bereich der Kraftübertragung (23) des Bediengriffs (1a, 1b) einen rechteckigen oder quadratischen Querschnitt aufweist.

5. Vorrichtung nach einem der Ansprüche 1 bis 4, **dadurch gekennzeichnet, dass** die Verstellachse (2) außerdem einen Anschlag (24) zur Blockierung der Bediengriffe (1a, 1b) in Längsrichtung umfasst.

6. Vorrichtung nach einem der Ansprüche 1 bis 5, **dadurch gekennzeichnet, dass** die Verstellachse (2) ein Unverwechselbarkeitssystem umfasst.

7. Vorrichtung nach Anspruch 6, **dadurch gekennzeichnet, dass** das Unverwechselbarkeitssystem mithilfe von Flächen der Verstellachse (2) mit unterschiedlichen Abmessungen gebildet ist.

8. Vorrichtung nach Anspruch 6, **dadurch gekennzeichnet, dass** das Unverwechselbarkeitssystem mithilfe einer Rippe (26) der Verstellachse (2) gebildet ist, die dazu bestimmt ist, einen Finger eines Bediengriffs (1a, 1b) aufzunehmen.

9. Vorrichtung nach einem der Ansprüche 1 bis 8, **dadurch gekennzeichnet, dass** das Rückstellelement (15), das einem Bediengriff (1a) des ersten Typs zugeordnet ist, Bestandteil des Bediengriffs (1a) ist, wobei dieser außerdem ein Verschlussstück (12) aufweist, und dadurch, dass das Rückstellelement (14), das einem Bediengriff (1b) des zweiten Typs zugeordnet ist, ein vom Bediengriff (1b) verschiedenes Element ist.

10. Verwendung einer Vorrichtung nach einem der Ansprüche 1 bis 9 zum Neigen der Rückenlehne eines Kraftfahrzeugsitzes.

11. Neigungsbausatz, welcher umfasst:
- eine Vorrichtung zum Neigen nach einem der Ansprüche 1 bis 9, die mit einer Neigungsbedienung (1a) des ersten Typs versehen ist,
- eine Vorrichtung zum Neigen nach einem der Ansprüche 1 bis 9, die mit einer Neigungsbedienung (1b) des zweiten Typs versehen ist.

## Claims

1. Seat-back tilting device comprising a tilt control handle (1a, 1b) which can be selected from a first control handle (1a) type and a second control handle (1b) type, and a tilt control shaft (2) on which the control handle (1a, 1b) is mounted, **characterized in that** the control shaft (2) comprises:
- a zone (21) for receiving a first return member (15) associated with a control handle (1a) of the first type,
- a zone (22) for receiving a second return member (14) associated with a control handle (1b) of the second type, and
- a zone (23) for transmitting forces from said control handle (1a, 1b).

2. Device according to Claim 1, **characterized in that** the zone (21) for receiving the first return member (15) and the zone (22) for receiving the second return member (14) are separate.

3. Device according to Claim 1, **characterized in that** the zone (21) for receiving the first return member (15) and the zone (22) for receiving the second return member (14) are coincident.

4. Device according to any of Claims 1 to 3, **characterized in that** the zone (23) for transmitting forces from the control handle (1a, 1b) is of rectangular or square section.

5. Device according to any of Claims 1 to 4, **characterized in that** the control shaft (2) also comprises a stop (24) for blocking the control handles (1a, 1b) longitudinally.

6. Device according to any of Claims 1 to 5, **characterized in that** the control shaft (2) comprises a polarization system.

7. Device according to Claim 6, **characterized in that** the polarization system is created by the use of different dimensions for the faces of the control shaft (2).

8. Device according to Claim 6, **characterized in that** the polarization system is created by means of a rib (26) of the control shaft (2) intended to receive a finger of a control handle (1a, 1b).

9. Device according to any of Claims 1 to 8, **characterized in that** the return member (15) associated with a control handle (1a) of the first type forms an integral part of said control handle (1a), said control handle additionally comprising a seal (12), and **in that** the return member (14) associated with a control handle (1b) of the second type is a member which is separate from said control handle (1b).

10. Use of a device according to any of Claims 1 to 9 for tilting the seat-back of a seat of a motor vehicle.

11. Tilt kit comprising:
- a tilting device according to Claims 1 to 9, equipped with a tilt control (1a) of the first type,
- a tilting device according to Claims 1 to 9, equipped with a tilt control (1b) of the second type.
